# EUROPÄISCHE PATENTSCHRIFT

(11) **EP 1 172 279 B1**
(45) Veröffentlichungstag und Bekanntmachung des Hinweises auf die Patenterteilung: **02.11.2006**
(21) Anmeldenummer: 01115597.5
(22) Anmeldetag: 28.06.2001
(51) Int. Cl.: B62D 5/06

(54) **Hydraulische Lenkanlage für Nutzfahrzeuge**
Hydraulic steering system for utility vehicles
Système de direction hydraulique pour véhicules utilitaires

(30) Priorität: 11.07.2000 DE 10033531
(43) Veröffentlichungstag der Anmeldung: 16.01.2002
(73) Patentinhaber: ZF Lenksysteme GmbH, 73527 Schwäbisch Gmünd (DE)
(72) Erfinder: Kogel, Walter, 73453 Neubronn (DE); Braun, Andreas, 73529 Schwäbisch Gmünd (DE); Löffler, Hans-Peter, 73577 Ruppertshofen (DE)

(56) Entgegenhaltungen:
- EP-A- 0 555 857
- EP-A- 1 006 041
- EP-A- 1 006 291
- DE-A- 4 106 310
- DE-A- 19 729 777

## Beschreibung

Die Erfindung betrifft eine hydraulische Lenkanlage für Nutzfahrzeuge, insbesondere Fremdkraftlenkanlage und/oder Hilflenkanlage für Nach- und/oder Vorlaufachsen.

Aus der Praxis bekannt sind Hilflenkanlagen für Nutzfahrzeuge, die zur Unterstützung der Manövrierfähigkeit und zur Verbesserung der Fahrdynamik eingesetzt werden. Diese Hilflenkanlagen werden insbesondere für die Hinterachse, die Nachlaufachse oder die Vorlaufachse eingesetzt, so daß diese zusätzlich einlenken können. Somit erhöht sich die Manövrierfähigkeit des entsprechenden Nutzfahrzeuges, beispielsweise eines Lastkraftwagens mit einer Vorderachse und zwei Hinterachsen. Dabei kann beispielsweise vorgesehen sein, daß die zweite Hinterachse, die sogenannte Nachlaufachse, bis zu einer gewissen Geschwindigkeit mitgelenkt wird. Die Steuerung der Nachlaufachse kann elektronisch, d.h. ohne mechanische Verbindungselemente, erfolgen. Die erforderliche Energie hierzu kann durch eine Hydraulikpumpe aufgebracht werden, die mit einem Hydraulikzylinder verbunden ist, der den Einschlagwinkel der Räder entsprechend stellt. Der Lenkwinkel, der sich an der Nachlaufachse einstellen soll, kann durch ein elektronisches Steuergerät (ECU) vorgegeben werden. Das Steuergerät kann dabei ein Steuerventil entsprechend schalten.

Von Nachteil ist, daß es sich bei dieser Art von Anlagen um aktive Systeme handelt. Sobald die Anlage ausfällt, wird die lenkbare Achse nur adhäsionsgelenkt. Dies gilt prinzipiell für alle elektronischen Lenkanlagen, die keine mechanischen Verbindungen aufweisen, wie z.B. Fremdkraftlenkanlagen oder Hilflenkanlagen, insbesondere dabei Hinterachslenkanlagen und gelenkte Vor- oder Nachlaufachsen.

Ein Ausfall des aktiven Systems, der zu einer Adhäsionslenkung führt, bewirkt eine Auslenkung der Räder durch Kräfte, die sich zwischen der Radlagerfläche und dem Reifen aufbauen. Insbesondere bei Kurvenfahrten wirken auf die Räder Seitenkräfte, die zur Folge haben, daß sich der Einschlagwinkel der Räder verändert. Somit können unerwünschte, schnelle Fahrzeugreaktionen auftreten, die zu einem Ausbrechen des Fahrzeugs führen können.

In nachteilhafter Weise können daher bei einem Systemausfall schnelle Lenkbewegungen der Achse auftreten, die eine Beherrschung des Nutzfahrzeuges unmöglich machen. Ein Ausbrechen des Fahrzeugs wird dadurch noch verstärkt, daß die gelenkte Achse, die im allgemeinen bei höheren Geschwindigkeiten in Geradeausfahrstellung steht und somit aufgrund der starren Stellung Seitenkräfte aufnimmt, dies bei einem plötzlichen Ausfall des aktiven Systemes nicht mehr kann und somit die Seitenführungskraft wegfällt und von der oder den noch verbliebenen Starrachsen übernommen werden muß. Somit müssen die Räder der Hauptachse bzw. der verbliebenen starren Achsen entsprechend mehr Kräfte aufnehmen. Dies führt unweigerlich zu einem erhöhten Schlupf an den Rädern dieser Achse und somit zu einem entsprechenden Ausweichen.

In nachteilhafter Weise ist die Aufnahme von Seitenkräften bei den gelenkten Achsen im mitgelenkten Zustand nur unbefriedigend, da diese durch Störgrößen, wie Seitenwindempfindlichkeit, Spurrinnen und dergleichen ausgelenkt werden. Eine Kompensierung dieser Störgrößen ist bei den bisher bekannten elektronisch geregelten Lenkanlagen nur mit hohem Aufwand möglich. Somit müssen in nachteilhafter Weise entsprechende Störungen der Fahrdynamik und der Fahrstabilität in Kauf genommen werden.

Die aus der Praxis bekannten Fremdkraftlenkanlagen, bei denen die komplette Kraft, die zum Einstellen der Räder notwenig ist, über Fremdkraft erzeugt wird, müssen, damit ein Ausfall der Fremdkraftlenkanlage vermieden wird, mittels einer zweiten redundanten Ebene abgesichert sein. Darüber hinaus gelten auch die vorgenannten Nachteile bezüglich der Seitenwindempfindlichkeit, und dergleichen.

Aus der DE 197 54 011 C1 und der gattüngsgemäßen DE 41 06 310 A1 sind jeweils Hilfskraftlenkungen, sogenannte Servolenkungen, bekannt, die Hilfskräfte zum Lenken erzeugen. Hilfskraftlenkanlagen sind dabei sowohl bezüglich ihres Einsatzgebietes, ihrer Aufgabe als auch vom konstruktiven Aufbau her unterschiedlich zu Hilflenkanlagen.

Die aus der DE 41 06 310 A1 bekannte Hilfskraftlenkung für Kraftfahrzeuge weist einen Servomotor auf, dessen beide Arbeitsräume über Arbeitsleitungen mit einem Steuerventil verbunden sind. In jeder der beiden Arbeitsleitungen ist ein Dämpfungsventil angeordnet, das parallel zueinander ein Rückschlagventil, eine Drossel und ein Druckbegrenzungsventil aufweist. Dabei öffnet das Rückschlagventil in Richtung auf den Arbeitsraum. Das Druckbegrenzungsventil öffnet in Richtung auf das Steuerventil.

Bei der DE 41 06 310 A1 ist dabei vorgesehen, daß das Rückschlagventil im unbelasteten Zustand offen ist, so daß kleine Fluidströme von einem Arbeitsraum des Hydraulikzylinders durch das Rückschlagventil fließen können. Aufgrund der vorhandenen mechanischen Verbindungen spürt der Fahrer somit in gewünschter Weise leichte Störgrößen, wie z.B. Seitenwind und Spurrillen.

In einer konkreten Ausführungsform ist dabei vorgesehen, daß das Rückschlagventil mittels einer Feder offengehalten wird und die Federkraft lediglich durch die bei großen Stößen auftretende erhöhte Reibung überwunden wird und somit das Rückschlagventil schließt. Die erhöhte Reibung resultiert dabei aus der erhöhten Strömungsgeschwindigkeit des Fluids. Die Feder wurde dabei je nach Ausführung entsprechend stark dimensioniert, damit gewährleistet ist, daß der Fahrer kleine und möglicherweise auch mittlere Stöße spürt und nur große Stöße gedämpft werden. Kleine Stöße und somit kleine Fluidmengen können somit das Rückschlagventil nicht schließen. Aufgrund der mechanischen Verbindungselemente gehen aus der DE 41 06 310 A1 auch keine Anregungen hervor, die sich mit der Problematik eines totalen Systemausfalles beschäftigen.

Aus der DE 197 54 011 C1 ist eine prinzipiell zu der vorgenannten Offenlegungsschrift ähnliche hydraulische Servolenkung bekannt, bei der an Hydraulikleitungen zwischen Servomotor und Servoventil Dämpferventilanordnungen vorgesehen sind. Um parameterabhängig die Dämpferwirkung der Dämpferventilanordnung zu beeinflussen, wirken Drosselelemente der Dämpferventilanordnung mit einer Federanordnung und einem elektrisch schaltbaren Magneten zusammen.

Die bekannte hydraulische Servolenkung betrifft prinzipiell dasselbe Einsatzgebiet wie die vorgenannte Offenlegungsschrift und die aus der Praxis bekannten Dämpferventilanordnungen. Ein Einsatz ist dabei lediglich für hydraulische Servolenkungen an der Vorderachse vorgesehen.

Auch bei der DE 197 54 011 C1 werden leichte Stöße an den Fahrer weitergegeben und größere Störkomponenten durch die Dämpferanordnung gedämpft. Eine Steuerung des Dämpferventils ist dabei durch ein elektromagnetisches Ventil vorgesehen. In nachteilhafter Weise ist diese Ausgestaltung teuer und erfordert eine separate Ansteuerung. Für diese Ansteuerung ist darüber hinaus Strom notwendig, der bei einem Systemausfall möglicherweise nicht mehr zur Verfügung steht. Abgesehen davon muß das Steuergerät funktionieren, damit das elektromagnetische Ventil entsprechende Impulse erhält. Ein Schutz vor einem kompletten Systemausfall bzw. einem Ausfall des aktiven Systems ist damit nicht möglich und nicht vorgesehen.

Der vorliegenden Erfindung liegt die Aufgabe zugrunde, eine hydraulische Lenkanlage für Nutzfahrzeuge, insbesondere eine Fremdkraftlenkanlage und/oder Hilflenkanlage für Nachlauf- und/oder Vorlaufachsen zu schaffen, die eine unkontrollierte Bewegung der lenkbaren Achsen selbst bei einem Ausfall des aktiven Systems verhindert und die eine optimale Manövrierfähigkeit, Fahrdynamik, Fahrstabilität und Spurstabilität gewährleistet.

Erfindungsgemäß wird diese Aufgabe durch die Merkmale des Anspruchs 1 gelöst.

Dadurch, daß hydraulische Lenkanlagen für Nutzfahrzeuge, insbesondere Fremdkraftlenkanlagen und/oder Hilflenkanlagen für Nachlauf- und/oder Vorlaufachsen, die elektronisch steuerbar sind, für jede Lenkrichtung mit einem Dämpferventil zwischen dem Hydraulikzylinder und einem Steuerventil versehen sind, lassen sich sowohl leichte als auch schwere Störkomponenten beseitigen. Störgrößen, wie z.B. Seitenwind oder Spurrillen, können durch die Dämpferventile komplett kompensiert werden. Aufgrund der elektronischen Steuerung der Lenkanlage ist eine Weitergabe der geringen Störkomponenten an den Fahrer sowohl unnötig als auch störend. Die elektronisch steuerbare hydraulische Lenkanlage kann somit vollkommen unabhängig vom Fahrer arbeiten und braucht von diesem nicht beeinflußt zu werden.

In besonders vorteilhafter Weise können die Dämpferventile dabei derart geschaltet werden, daß große Störungen, insbesondere auch ein kompletter Ausfall des aktiven Systems, stark gedämpft wird, so daß sich der Fahrer auf die geänderte Fahrsituation einstellen kann. Die Dämpferventile sorgen dafür, daß sich der Einschlagwinkel der Räder nur langsam verändert. Damit hat der Fahrer genügend Zeit, entsprechende Maßnahmen zu ergreifen und sich auf die neue Fahrzeugreaktion einzustellen.

Durch die Dämpferventile können selbst kleine Radbewegungen gedämpft werden, so daß eine besonders hohe Fahrsicherheit, Fahrdynamik und Fahrstabilität erreicht werden kann.

Die erfindungsgemäße elektronisch steuerbare hydraulische Lenkanlage kann somit völlig von der Vorderachselenkanlage entkoppelt werden.

Die erfindungsgemäße Lösung läßt sich sowohl für Vor- und/oder Nachlaufachsen als auch für die Hinterachselenkung oder Fremdkraftlenkanlagen einsetzen.

Erfindungsgemäß kann ferner vorgesehen sein, daß die Dämpferventile jeweils parallel geschaltet ein Rückschlagventil und/oder ein Druckbegrenzungsventil und/oder eine Blende aufweisen, wobei vorteilhaft ist, wenn das Rückschlagventil derart ausgebildet ist, daß ein Fluidstrom nur in Richtung eines Arbeitsraumes des Hydraulikzylinders möglich ist.

Durch eine derartige Ausbildung ist es in einfacher Weise möglich, die auftretenden Störgrößen zu kompensieren. Da ein Rücklauf des Fluids durch das Rückschlagventil nicht möglich ist, bestimmt die Auswahl des Strömungsquerschnittes der Blende die Dämpfwirkung des Dämpferventiles. Eine übermäßige Belastung der Lenkungsteile kann dabei durch das Druckbegrenzungsventil vermieden werden, das bei einem Auftreten eines bestimmten Maximalwertes in den Arbeitsräumen des Hydraulikzylinders in Richtung des Steuerventiles öffnet.

Dadurch, daß das Rückschlagventil einen Fluidstrom nur in Richtung des Arbeitsraumes des Hydraulikzylinders ermöglicht, ist sichergestellt, daß auch bei einem kompletten Ausfall des aktiven Systems, aufgrund der starken Dämpfung, keine unkontrollierten Lenkbewegungen der Räder erfolgen.

In einer konstruktiven Ausgestaltung der Erfindung kann dabei vorgesehen sein, daß das Rückschlagventil mit einem Zuhalteglied derart versehen ist, daß das Rückschlagventil im unbelasteten Zustand geschlossen ist.

Wie sich in Versuchen herausgestellt hat, läßt sich eine Dämpfung in besonders vorteilhafter Weise dadurch erreichen, daß ein derartiges Zuhalteglied vorgesehen ist. Ein Fluidstrom vom Arbeitsraum durch das Rückschlagventil wird somit zuverlässig verhindert und somit die oben genannten Vorteile erzielt.

In einer Ausgestaltung der Erfindung kann dabei vorgesehen sein, daß das Zuhalteglied derart ausgebildet ist, daß das Rückschlagventil darüber hinaus auch im durch Fluidströme in Richtung Arbeitsraum des Hydraulikzylinders unbelasteten Zustand gegen Schwingungen und Gewichtskräfte derart geschlossen ist, daß ein Fluidstrom aus dem Arbeitsraum des Hydraulikzylinders durch das Rückschlagventil ausgeschlossen ist.

Durch eine derartige Vorspannung des Systems ist eine optimale Störgrößenkompensation möglich. Störgrößen, wie Seitenwindempfindlichkeit, Spurrillen und dergleichen, die zum Auslenken der Achse führen, werden damit zuverlässig beseitigt. Dadurch, daß auch Schwingungen und Gewichtskräfte bzw. Zentrifugalkräfte und dergleichen bei der Vorspannung durch das Zuhalteglied berücksichtigt werden, wird ein Fluidstrom vom Arbeitsraum durch das Rückschlagventil zuverlässig verhindert. Selbst sensible Reaktionen und kleinste Radbewegungen werden zuverlässig gedämpft. Somit können die derart gelenkten Räder auch im aktiv gesteuerten Modus bzw. bei höheren Geschwindigkeiten in der GeradeausFahrstellung Seitenkräfte übernehmen. Die Fahrstabilität, die Fahrdynamik und die Spurstabilität wird somit entschieden verbessert. Die Räder an der Hauptachse werden entsprechend entlastet und ein Auftreten von Schlupf bzw. ein Ausbrechen verringert.

Vorteilhafte Weiterbildungen und Ausgestaltungen der Erfindung ergeben sich aus den weiteren Unteransprüchen und aus dem nachfolgend anhand der Zeichnung prinzipmäßig dargestellten Ausführungsbeispiel.

### Es zeigt:

- Fig. 1: eine schematische Darstellung einer elektronisch gesteuerten hydraulischen Hinterachslenkanlage;

- Fig. 2: eine schematische Darstellung eines Dämpferventils; und
- Fig. 3: einen Schnitt durch eine Ausführungsform eines Dämpferventils.

Die in dem Ausführungsbeispiel dargestellte elektronisch gesteuerte hydraulische Hinterachslenkanlage stellt lediglich eine Einsatzvariante der elektronisch gesteuerten hydraulischen Lenkanlage dar. Analog dazu kann diese bei Fremdkraftlenkanlagen und gelenkten Vorder- oder Nachlaufachsen sowohl an der Hinterachse als auch an der Vorderachse eingesetzt werden.

Die elektronisch gesteuerte hydraulische Lenkanlage ist nur insoweit näher dargestellt, als dies für die Erklärung der erfindungsgemäßen Lösung notwendig ist. Ansonsten weist die genannte Lenkanlage prinzipiell bekannte Elemente auf.

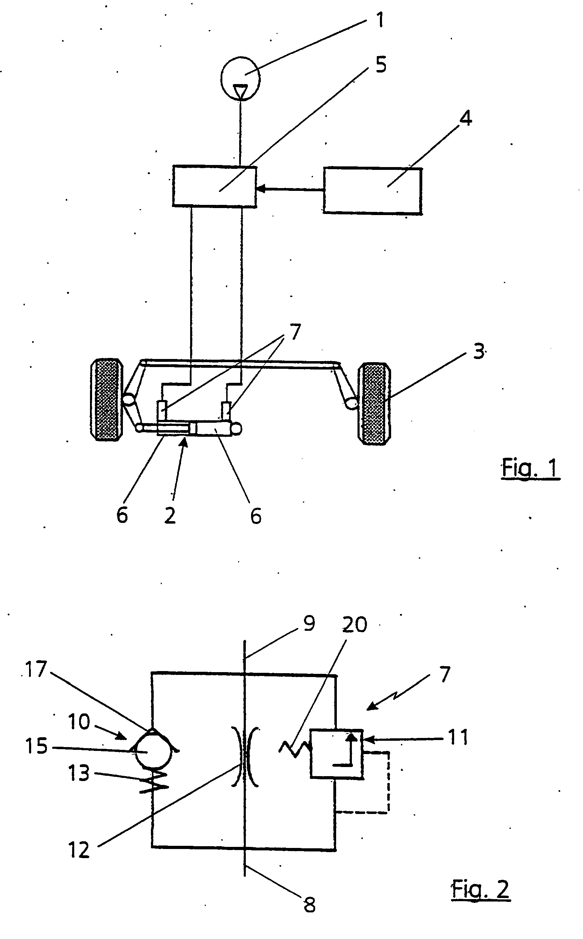

Wie aus Fig. 1 ersichtlich, weist die hydraulisch betätigte Hinterachslenkanlage eine Hydraulikpumpe 1 auf, die die Energie für einen Hydraulikzylinder 2 liefert. Dabei ist in dem dargestellten Ausführungsbeispiel lediglich ein doppelwirkender Hydraulikzylinder 2 vorgesehen, um die Einschlagwinkel der Räder 3 in bekannter Weise zu verändern.

Alternativ und in nicht dargestellter Weise können auch zwei Hydraulikzylinder 2 vorgesehen sein.

Der Soll-Einschlagwinkel der Räder 3, der sich an der dargestellten lenkbaren Hinterachse einstellen soll, wird durch ein elektronisches Steuergerät 4 vorgegeben. Hierzu wird in bekannter, nicht dargestellter Weise mittels eines Sensors der Lenkwinkel an der Vorderachse bestimmt und die entsprechenden Informationen an das Steuergerät 4 weitergegeben. Anhand der ermittelten Daten steuert das Steuergerät 4 ein Steuerventil 5, das den Fluidstrom zum Hydraulikzylinder 2 steuert. Somit werden Arbeitsräume 6 des Hydraulikzylinders 2 entsprechend vergrößert bzw. verkleinert.

Das Steuerventil 5 kann als 3-Wege-Ventil mit offener Mitte ausgebildet sein. In dem dargestellten Ausführungsbeispiel ist das Steuerventil als Proportionalventil 5 ausgebildet. Die Hinterachse wird proportional zur Vorderachse gesteuert. Dabei kann vorgesehen sein, daß die lenkbare Hinterachse nur bis zu einer gewissen Geschwindigkeit des Nutzfahrzeuges, beispielsweise 40 km/h, gelenkt wird. Bei höheren Fahrgeschwindigkeiten kann es zur Erhöhung der Fahrstabilität sinnvoll sein, die gelenkten Räder 3 in eine Geradeausstellung zu bringen.

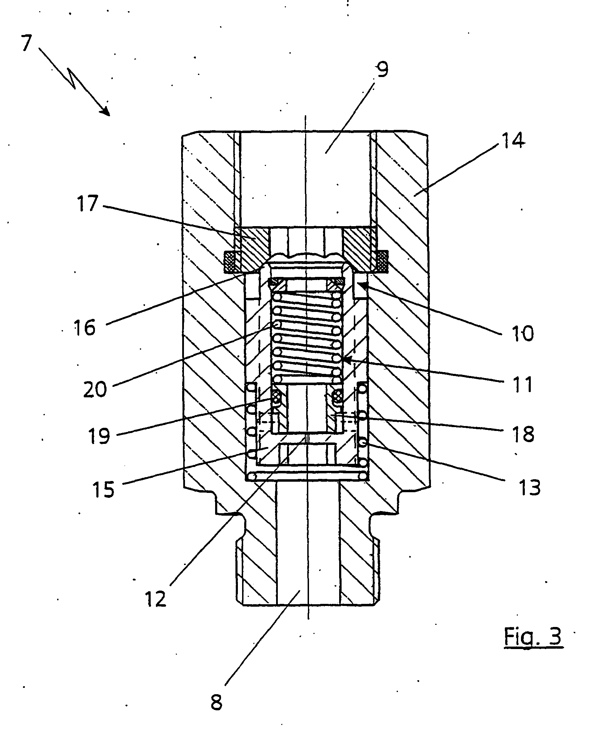

Zwischen dem Hydraulikzylinder 2 und dem Steuerventil 5 sind zwei Dämpferventile 7, deren Aufbau in Fig. 2 und Fig. 3 näher dargestellt ist, angeordnet. Durch die Dämpferventile 7 ist es möglich, daß selbst kleine Radbewegungen, die z.B. durch Straßenunebenheiten, Spurrillen usw. entstehen können, gedämpft werden. Durch die Dämpferventile 7 ist somit eine sensible Reaktion, die bereits bei kleinsten Fluidmengen anspricht, möglich.

Das in Fig. 2 dargestellte Dämpferventil 7 kann mit einem Anschluß 8 an den Hydraulikzylinder 2 angeschlossen werden. Ein Anschluß 9 kann dabei an eine zum Steuerventil 5 führende Leitung bzw. direkt an dem Steuerventil 5 angeschlossen werden. Das Dämpferventil 7 weist parallel geschaltet ein Rückschlagventil 10, ein Druckbegrenzungsventil 11 und eine Blende 12 auf. Dabei läßt das Rückschlagventil 10 einen Fluidstrom nur in Richtung auf den entsprechenden Arbeitsraum 6 des Hydraulikzylinders 2 zu. Wird der Druck im Hydraulikzylinder 2 höher als der Schaltdruck des Druckbegrenzungsventils 11, dann öffnet das Druckbegrenzungsventil 11 in Richtung auf das Steuerventil 5. Somit wird der Druck in dem Arbeitsraum 6 durch das Druckbegrenzungsventil 11 auf einen bestimmten Maximalwert begrenzt. Eine übermäßige Belastung der Lenkungsteile wird somit verhindert. Durch die Blende 12 wird der Rücklauf aus dem Arbeitsraum 6 gedrosselt. Durch die Auswahl des Strömungsquerschnittes der Blende 12 kann die erforderliche Dämpfwirkung eingestellt werden. Durch die Blende 12 ist das Fluidvolumen im Hydraulikzylinder 2 bzw. im Arbeitsraum 6 nicht vollständig eingeschlossen, so daß sich der Einschlagwinkel der Räder 3 weiterhin gedämpft verändern kann.

Wie in Fig. 2 erkennbar, ist das Rückschlagventil 10 mit einem Zuhalteglied 13 versehen. In dem dargestellten Ausführungsbeispiel ist das Zuhalteglied als Druckfeder 13 ausgebildet. Der Rückschlagkolben 15 ist dadurch in Schließrichtung federbelastet. Die Feder 13 ist also derart angeordnet, daß das Rückschlagventil 10 im unbelasteten Zustand geschlossen ist. Mit "unbelasteter Zustand" ist dabei ein Zustand gemeint, in dem kein Druck am Rückschlagventil 10 abfällt. Dadurch, daß das Rückschlagventil 10 durch die Feder 13 im unbelasteten Zustand geschlossen ist, tritt eine Dämpfung sofort, also bereits bei kleinsten Radbewegungen, ein. D.h., zum Schließen des Rückschlagventils 10 ist kein eine entsprechende Reibung verursachender Fluidstrom notwendig. Somit ist das System vorgespannt und es ist eine optimale Störgrößenkompensation möglich.

Ein derartiges Schließen des Rückschlagventils 10 ist dabei in einfacher Weise möglich, wenn die Druchfeder 13 an der dem Hydraulikzylinder 2 zugewandten Seite des Rückschlagventiles 10 angeordnet ist, wenn also auf den Rückschlagkolben 15 eine Kraft in Schließrichtung ausgeübt wird. Durch diese Anordnung und die Ausgestaltung des Zuhaltegliedes als Feder 13 wird eine besonders kostengünstige, zuverlässige und konstruktiv einfach zu handhabende Lösung erzielt, die das Rückschlagventil 10 im unbelasteten Zustand schließt.

Die Feder 13 kann derart ausgebildet sein, daß das Rückschlagventil 10 im durch Fluidströme in Richtung Arbeitsraum 6 des Hydraulikzylinders 2 an sich unbelasteten Zustand auch bei Schwingungen (vorzugsweise im Frequenzbereich von 20 bis 50 Hz) der Achse und der Gewichtskräfte geschlossen bleibt. Somit ist auch bei solchen Schwingungen ein Fluidstrom aus dem Arbeitsraum 6 des Hydraulikzylinders 2 durch das Rückschlagventil 10 ausgeschlossen. Dabei kann vorgesehen sein, daß die Feder 13 erst bei einem Fluiddruck von 1 bis 5, vorzugsweise 2 bar, öffnet und einen Fluidstrom in Richtung des Arbeitsraumes 6 des Hydraulikzylinders 2 ermöglicht. Wie sich in Versuchen gezeigt hat, ist ein derartiger Schließdruck besonders geeignet. Berücksichtigt werden kann dabei auch die aus dem Eigengewicht der Feder 13 bzw. des Rückschlagkolbens 15 resultierende Gewichtskraft, die je nach Einbau des Rückschlagventils 10 bzw. der momentanen Fahrzeuglage entsprechend wirkt.

Wie aus Fig. 3 ersichtlich, kann das Dämpferventil 7 in einer besonders vorteilhaften Ausführungsform derart ausgebildet sein, daß das Rückschlagventil 10, das Druckbegrenzungsventil 11 und die Blende 12 als eine Baueinheit in einem Gehäuse 14 ausgebildet sind. Das Rückschlagventil 10 wird dabei durch einen Rückschlagkolben 15 gebildet, der wenigstens annähernd einen H-förmigen Querschnitt aufweist. Der Rückschlagkolben 15 wird dabei außenseitig von der Feder 13 umgeben. Durch die Feder 13 wird ein abgerundeter Kopf 16 des Rückschlagkolbens 15 an ein mit einer entsprechenden Gegenkontur versehenes Gegenglied, in dem Ausführungsbeispiel eine als Sechskantmutter ausgebildete Mutter 17, angeschlagen. Das Rückschlagventil 10 ist somit geschlossen.

Die Blende 12 ist, wie ebenfalls aus Fig. 3 ersichtlich, als Bohrung ausgebildet und im Querbalken des im Querschnitt dargestellten H-förmigen Rückschlagkolbens 15 angeordnet.

Das Druckbegrenzungsventil 11 schließt sich an die Blende 12 an und ist innerhalb des Rückschlagkolbens 15 angeordnet. Das Druckbegrenzungsventil 11 ist als Druckbegrenzungskolben 18 mit einem O-Ring 19 und einer Druckbegrenzungsfeder 20 ausgebildet.

Analog zu dem in Fig. 2 dargestellten prinzipmäßigen Dämpferventil 7, weist das in Fig. 3 dargestellte vorteilhafte Dämpferventil einen Anschluß 8 an den Hydraulikzylinder 2 und einen Anschluß 9 an das Steuerventil 5 auf.

Durch die erfindungsgemäße hydraulische Lenkanlage für Nutzfahrzeuge ist es möglich, beispielsweise eine Hinterachslenkanlage völlig von der Vorderachslenkanlage zu entkoppeln. Dabei ist eine Rückmeldung von Fahrbahnunebenheiten, Seitenwind und dergleichen an den Lenker des Fahrzeuges zum einen nicht notwendig, zum anderen störend und wird erfindungsgemäß durch die Dämpferventile 7 unterbunden. Bei einem Systemausfall bzw. einem Totalausfall werden darüber hinaus durch die Dämpferventile 7 keine schnellen Lenkbewegungen zugelassen, da sonst das Fahrzeug nicht mehr beherrschbar wäre. Somit kann die derart gelenkte Hinterachse bzw. die Vor- oder Nachlaufachse in besonders vorteilhafter Weise Seitenkräfte sowohl im aktiven Zustand als auch in der Geradeaus-Fahrposition übernehmen. Ein plötzliches Freischalten bei einem Systemausfall, das zur Folge hätte, daß keine Seitenkräfte mehr übernommen werden können und somit das Fahrzeug ausbricht, wird dadurch verhindert.

## Patentansprüche

1. Hydraulische Lenkanlage für Nutzfahrzeuge, insbesondere Fremdkraftlenkanlage und/oder Hilfskraftlenkanlage für Nachlauf- und/oder Vorlaufachsen, wobei die Lenkanlage frei von mechanischen Steuer-Verbindungen zwischen einer Lenkhandhabe und einem Steuerventil (5) ist und elektronisch steuerbar ist und wobei zum Verändern eines Einschlagwinkels von Rädern (3) wenigstens ein Hydraulikzylinder (2) und das Steuerventil (5) vorgesehen sind, zwischen denen für jede Lenkrichtung ein Dämpferventil (7) vorgesehen ist und wobei jedes Dämpferventil (7) ein Rückschlagventil (10) aufweist und wobei das Rückschlagventil (10) mit einem Zuhalteglied (13) derart versehen ist, dass das Rückschlagventil (10) im unbelasteten Zustand geschlossen ist,
**dadurch gekennzeichnet, dass** das Zuhaltglied (13) derart ausgebildet ist, dass das Rückschlagventil (10) darüber hinaus auch im durch Fluidströme in Richtung des Arbeitsraumes (6) des Hydraulikzylinders (2) unbelasteten Zustand gegen Schwingungen und Gewichtskräfte derart geschlossen ist, dass ein Fluidstrom aus dem Arbeitsraum (6) des Hydraulikzylinders (2) durch das Rückschlagventil (10) ausgeschlossen ist.

2. Lenkanlage nach Anspruch 1,
**dadurch gekennzeichnet, daß**
an jedem Arbeitsraum (6) des Hydraulikzylinders (2) ein Dämpferventil (7) angeschlossen ist.

3. Lenkanlage nach Anspruch 1 oder 2,
**dadurch gekennzeichnet, daß**
zwei Hydraulikzylinder (2) und zwei Dämpferventile (7) vorgesehen sind, wobei jeweils ein Arbeitsraum (6) eines Hydraulikzylinders (2) mit einem Arbeitsraum (6) des anderen Hydraulikzylinders (2) gemeinsam an einem Dämpferventil (7) anschließbar ist.

4. Lenkanlage nach einem der Ansprüche 1 bis 3,
**dadurch gekennzeichnet, daß**
die Dämpferventile (7) jeweils parallelgeschaltet ein Rückschlagventil (10) und/oder ein Druckbegrenzungsventil (11) und/oder eine Blende (12) aufweisen.

5. Lenkanlage nach Anspruch 4,
**dadurch gekennzeichnet, daß**
das Rückschlagventil (10) derart ausgebildet ist, daß ein Fluidstrom durch das Rückschlagventil (10) nur in Richtung des Arbeitsraumes (6) des Hydraulikzylinders (2) möglich ist.

6. Lenkanlage nach Anspruch 1,
**dadurch gekennzeichnet, daß** der
Rückschlagkolben (15) des Rückschlagventils (10) von dem Zuhalteglied (13) in Schließrichtung belastet ist.

7. Lenkanlage nach Anspruch 1 oder 6,
**dadurch gekennzeichnet, dass** das Zuhaltglied (13) derart ausgebildet ist, daß das Rückschlagventil (10) im an sich durch Fluidströme in Richtung des Arbeitsraums (6) des Hydraulikzylinders (2) unbelasteten Zustand selbst bei Schwingungen derart geschlossen ist, daß ein Fluidstrom aus dem Arbeitsraum (6) des Hydraulikzylinders (2) durch das Rückschlagventil (10) ausgeschlossen ist.

8. Lenkanlage nach Anspruch 7,
**dadurch gekennzeichnet, daß**
das Zuhalteglied (13) derart ausgebildet ist, daß es erst bei einem Fluiddruck von 1 bis 5, vorzugsweise 2 bis 3 bar, öffnet und einen Fluidstrom in Richtung des Arbeitsraumes (6) des Hydraulikzylinders (2) ermöglicht.

9. Lenkanlage nach einem der Ansprüche 1 bis 8,
**dadurch gekennzeichnet, daß**
das Zuhalteglied (13) als Feder ausgebildet ist.

10. Lenkanlage nach einem der Ansprüche 4 bis 9,
**dadurch gekennzeichnet, daß**
das Rückschlagventil (10), das Druckbegrenzungsventil (11) und die Blende (12) als eine Baueinheit in einem gemeinsamen Gehäuse (14) ausgebildet sind.

11. Lenkanlage nach Anspruch 10,
**dadurch gekennzeichnet, daß**
das Rückschlagventil (10) einen im Querschnitt H-förmigen Rückschlagkolben (15) aufweist, wobei ein Kopf (16) des Rückschlagkolbens (15) mittels der Feder (13) auf eine Mutter (17) schlägt und das Rückschlagventil (10) schließt.

12. Lenkanlage nach Anspruch 11,
**dadurch gekennzeichnet, daß**
ein Querbalken des H-förmigen Rückschlagkolbens (15) mit der Blende (12) versehen ist.

13. Lenkanlage nach Anspruch 10 oder 11,
**dadurch gekennzeichnet, daß**
das Druckbegrenzungsventil (11) einen innerhalb seines Rückschlagkolbens (15) angeordneten Druckbegrenzungskolben (18) und eine Druckbegrenzungsfeder (20) aufweist.

14. Lenkanlage nach Anspruch 1,
**dadurch gekennzeichnet, dass**
das Zuhalteglied (13) an der dem Hydraulikzylinder (2) zugewandten Seite des Rückschlagventils (10) angeordnet ist.

15. Lenkanlage nach einem der Ansprüche 1 bis 14,
**dadurch gekennzeichnet, daß**
ein Soll-Einschlagwinkel der Räder (3) durch ein elektronisches Steuergerät (4) vorgebbar ist.

16. Lenkanlage nach einem der Ansprüche 1 bis 15,
**dadurch gekennzeichnet, daß**
das Steuerventil (5) als 3-Wege-Ventil mit offener Mitte ausgebildet ist.

17. Lenkanlage, nach einem der Ansprüche 1 bis 15
**dadurch gekennzeichnet, daß**
das Steuerventil als Proportionalventil (5) ausgebildet ist.

## Claims

1. Hydraulic steering system for commercial vehicles, in particular external assistance steering system and/or power assistance steering system for trailing and/or leading axles, the steering system being free from mechanical control connections between a steering handle and a control valve (5) and being electronically controllable, and at least one hydraulic cylinder (2) and the control valve (5) being provided for changing a lock angle of wheels (3), between which at least one hydraulic cylinder (2) and the control valve (5) a damper valve (7) is provided for each steering direction, and each damper valve (7) having a non-return valve (10) and the non-return valve (10) being provided with a closure member (13) in such a way that the non-return valve (10) is closed in the unloaded state, **characterized in that** the closure member (13) is configured in such a way that the non-return valve (10) is also, moreover, closed with respect to oscillations and weights in the state which is not loaded by fluid flows in the direction of the working space (6) of the hydraulic cylinder (2), in such a way that a fluid flow out of the working space (6) of the hydraulic cylinder (2) is precluded by the non-return valve (10).

2. Steering system according to Claim 1, **characterized in that** a damper valve (7) is connected to each working space (6) of the hydraulic cylinder (2).

3. Steering system according to Claim 1 or 2, **characterized in that** two hydraulic cylinders (2) and two damper valves (7) are provided, it being possible to connect in each case one working space (6) of a hydraulic cylinder (2) to a working space (6) of the other hydraulic cylinder (2) jointly on a damper valve (7).

4. Steering system according to one of Claims 1 to 3, **characterized in that** the damper valves (7), in each case connected in parallel, have a non-return valve (10) and/or a pressure-relief valve (11) and/or an orifice plate (12).

5. Steering system according to Claim 4, **characterized in that** the non-return valve (10) is configured in such a way that a fluid flow is possible through the non-return valve (10) only in the direction of the working space (6) of the hydraulic cylinder (2).

6. Steering system according to Claim 1, **characterized in that** the non-return plunger (15) of the non-return valve (10) is loaded in the closing direction by the closure member (13).

7. Steering system according to Claim 1 or 6, **characterized in that** the closure member (13) is configured in such a way that the non-return valve (10) is itself closed, even in the event of oscillations, in the state which is not loaded by fluid flows in the direction of the working space (6) of the hydraulic cylinder (2), in such a way that a fluid flow out of the working space (6) of the hydraulic cylinder (2) is precluded by the non-return valve (10).

8. Steering system according to Claim 7, **characterized in that** the closure member (13) is configured in such a way that it does not open until it is at fluid pressure of from 1 to 5, preferably from 2 to 3 bar, and makes a fluid flow possible in the direction of the working space (6) of the hydraulic cylinder (2).

9. Steering system according to one of Claims 1 to 8, **characterized in that** the closure member (13) is configured as a spring.

10. Steering system according to one of Claims 4 to 9, **characterized in that** the non-return valve (10), the pressure-relief valve (11) and the orifice plate (12) are configured as one structural unit in a common housing (14).

11. Steering system according to Claim 10, **characterized in that** the non-return valve (10) has a non-return plunger (15) of H-shaped cross section, a head (16) of the non-return plunger (15) striking a nut (17) by means of the spring (13) and closing the non-return valve (10).

12. Steering system according to Claim 11, **characterized in that** a transverse bar of the H-shaped non-return plunger (15) is provided with the orifice plate (12).

13. Steering system according to Claim 10 or 11, **characterized in that** the pressure-relief valve (11) has a pressure-relief plunger (18), which is arranged within its non-return plunger (15), and a pressure-relief spring (20).

14. Steering system according to Claim 1, **characterized in that** the closure member (13) is arranged on that side of the non-return valve (10) which faces the hydraulic cylinder (2).

15. Steering system according to one of Claims 1 to 14, **characterized in that** a setpoint lock angle of the wheels (3) can be predefined by an electronic control unit (4) .

16. Steering system according to one of Claims 1 to 15, **characterized in that** the control valve (5) is configured as a 3-way valve having an open centre.

17. Steering system according to one of Claims 1 to 15, **characterized in that** the control valve is configured as a proportional valve (5).

## Revendications

1. Système de direction hydraulique pour véhicules utilitaires, notamment système de direction à force extérieure et/ou système de direction à force auxiliaire pour les essieux entraînés et/ou d'avance, le système de direction étant dépourvu de liaisons de commande mécaniques entre une manette de direction et une vanne de commande (5) et pouvant être commandé de manière électronique et au moins un vérin hydraulique (2) ainsi que la vanne de commande (5) étant prévus pour modifier un angle de braquage des roues (3), entre lesquels une vanne d'amortissement (7) est prévue pour chaque sens de direction et chaque vanne d'amortissement (7) présentant un clapet anti-retour (10) et le clapet anti-retour (10) étant muni d'un élément de maintien en position fermée (13) de telle sorte que le clapet anti-retour (10) est fermé en l'absence de charge, **caractérisé en ce que** l'élément de maintien en position fermée (13) est configuré de telle sorte que le clapet anti-retour (10), en plus de cela même en l'absence de charge par les courants de fluide en direction de l'espace de travail (6) du vérin hydraulique (2), est fermé contre les oscillations et les poids de telle sorte qu'un courant de fluide provenant de l'espace de travail (6) du vérin hydraulique (2) à travers le clapet anti-retour (10) est exclu.

2. Système de direction selon la revendication 1, **caractérisé en ce qu'**une vanne d'amortissement (7) est raccordée à chaque espace de travail (6) du vérin hydraulique (2).

3. Système de direction selon la revendication 1 ou 2, **caractérisé en ce que** deux vérins hydrauliques (2) et deux vannes d'amortissement (7) sont prévus, un espace de travail (6) d'un vérin hydraulique (2) avec un espace de travail (6) de l'autre vérin hydraulique (2) pouvant à chaque fois être reliés conjointement à une vanne d'amortissement (7).

4. Système de direction selon l'une des revendications 1 à 3, **caractérisé en ce que** les vannes d'amortissement (7) présentent respectivement un clapet anti-retour (10) et/ou un limiteur de pression (11) et/ou un obturateur (12) branché en parallèle.

5. Système de direction selon la revendication 4, **caractérisé en ce que** le clapet anti-retour (10) est configuré de telle sorte qu'un courant de fluide à travers le clapet anti-retour (10) est seulement possible en direction de l'espace de travail (6) du vérin hydraulique (2).

6. Système de direction selon la revendication 1, **caractérisé en ce que** le piston anti-retour (15) du clapet anti-retour (10) est chargé en direction de la fermeture par l'élément de maintien en position fermée (13).

7. Système de direction selon la revendication 1 ou 6, **caractérisé en ce que** l'élément de maintien en position fermée (13) est configuré de telle sorte que le clapet anti-retour (10), dans l'état non chargé en lui-même par les courants de fluide en direction de l'espace de travail (6) du vérin hydraulique (2) est fermé même en cas de vibrations de telle sorte qu'un courant de fluide provenant de l'espace de travail (6) du vérin hydraulique (2) à travers le clapet anti-retour (10) est exclu.

8. Système de direction selon la revendication 7, **caractérisé en ce que** l'élément de maintien en position fermée (13) est configuré de telle sorte qu'il ne s'ouvre qu'en présence d'une pression du fluide de 1 à 5, de préférence de 2 à 3 bar et permet un courant de fluide en direction de l'espace de travail (6) du vérin hydraulique (2).

9. Système de direction selon l'une des revendications 1 à 8, **caractérisé en ce que** l'élément de maintien en position fermée (13) est réalisé sous la forme d'un ressort.

10. Système de direction selon l'une des revendications 4 à 9, **caractérisé en ce que** le clapet anti-retour (10), le limiteur de pression (11) et l'obturateur (12) sont réalisés sous la forme d'un sous-ensemble dans un boîtier (14) commun.

11. Système de direction selon la revendication 10, **caractérisé en ce que** le clapet anti-retour (10) présente un piston anti-retour (15) ayant une section transversale en forme de H, une tête (16) du piston anti-retour (15) venant frapper sur un écrou (17) au moyen du ressort (13) et fermant le clapet anti-retour (10).

12. Système de direction selon la revendication 11, **caractérisé en ce qu'**une traverse du piston anti-retour (15) en forme de H est munie de l'obturateur (12).

13. Système de direction selon la revendication 10 ou 11, **caractérisé en ce que** le limiteur de pression (11) présente un piston de limitation de pression (18) et un ressort de limitation de pression (20) disposés à l'intérieur de son piston anti-retour (15).

14. Système de direction selon la revendication 1, **caractérisé en ce que** l'élément de maintien en position fermée (13) est disposé sur le côté du clapet anti-retour (10) dirigé vers le vérin hydraulique (2).

15. Système de direction selon l'une des revendications 1 à 14, **caractérisé en ce qu'**un angle de braquage de consigne des roues (3) peut être prédéfini par un appareil de commande électronique (4).

16. Système de direction selon l'une des revendications 1 à 15, **caractérisé en ce que** la vanne de commande (5) est réalisée sous la forme d'un distributeur à 3 voies au centre ouvert.

17. Système de direction selon l'une des revendications 1 à 15, **caractérisé en ce que** la vanne de commande est réalisée sous la forme d'une vanne proportionnelle (5).
